(19) Europäisches Patentamt
European Patent Office
Office européen des brevets

(11) **EP 3 529 046 B1**

(12) **EUROPÄISCHE PATENTSCHRIFT**

(45) Veröffentlichungstag und Bekanntmachung des Hinweises auf die Patenterteilung:
**06.12.2023  Patentblatt 2023/49**

(21) Anmeldenummer: **17832805.0**

(22) Anmeldetag: **12.10.2017**

(51) Internationale Patentklassifikation (IPC):
*B29C 64/106* (2017.01)        *B29C 64/20* (2017.01)
*B33Y 70/00* (2020.01)        *B33Y 10/00* (2015.01)
*B33Y 30/00* (2015.01)

(52) Gemeinsame Patentklassifikation (CPC):
**B29C 64/106; B29C 64/20; B33Y 10/00; B33Y 30/00; B33Y 70/00**

(86) Internationale Anmeldenummer:
**PCT/IB2017/056303**

(87) Internationale Veröffentlichungsnummer:
**WO 2018/073700 (26.04.2018 Gazette 2018/17)**

(54) **VERFAHREN UND VORRICHTUNG ZUR HERSTELLUNG EINES DREIDIMENSIONALEN GEGENSTANDS**

METHOD AND DEVICE FOR PRODUCING A THREE-DIMENSIONAL OBJECT

PROCÉDÉ ET DISPOSITIF DE FABRICATION D'UN OBJET TRIDIMENSIONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2016  DE 102016120098**

(43) Veröffentlichungstag der Anmeldung:
**28.08.2019  Patentblatt 2019/35**

(73) Patentinhaber: **Ensinger GmbH**
**71154 Nufringen (DE)**

(72) Erfinder:
• **MÖLLER, Michael**
**93413 Cham (DE)**
• **SCHWEIGER, Dominik**
**93466 Chamerau (DE)**

(74) Vertreter: **Maiwald GmbH**
**Elisenhof**
**Elisenstraße 3**
**80335 München (DE)**

(56) Entgegenhaltungen:
CN-A- 105 666 876        US-A1- 2012 080 814
US-A1- 2015 145 168        US-A1- 2016 271 880

**Beschreibung**

Gebiet der Erfindung

Die vorliegende Erfindung betrifft ein Verfahren und eine Vorrichtung zur Herstellung eines dreidimensionalen Gegenstands. Insbesondere betrifft die Erfindung ein Verfahren und eine Vorrichtung zum generativen Aufbau eines dreidimensionalen Gegenstands aus einem Hochtemperatur-Polymerwerkstoff (dreidimensionales Drucken).

Technologischer Hintergrund

Dreidimensionale Gegenstände aus Polymerwerkstoffen können in großen Stückzahlen z.B. durch Gießen bzw. Spritzgießen in Formwerkzeugen oder durch Extrudieren, Corrugieren oder zerspanendes/abtragendes Bearbeiten von Halbzeugen hergestellt werden. Im Spritzgussverfahren können komplexe Geometrien der Polymerwerkstoffteile präzise und in schneller Taktzeit realisiert werden. Dies erfordert aber immer den Bau eines eigens auf die Teilegeometrie ausgelegten, hochpreisigen Spritzgusswerkzeuges, welches sich in der Regel erst bei hohen Stückzahlen amortisiert. Für die Herstellung kleiner Serien oder für die Einzelteilherstellung, z.B. Musterteile oder hochpreisige Spezialanfertigungen mit kurzzeitigen Bereitstellungsanforderungen, kommen typischerweise Herstellungsverfahren wie zerspanende Bearbeitung von Halbzeugen oder generative Fertigungsverfahren zum Einsatz. Generative Fertigungsverfahren, zu denen das "dreidimensionale Drucken" (im Folgenden kurz: "3D-Druck") zählt, ermöglichen das sogenannte Rapid Prototyping oder Rapid Manufacturing, also das direkte Herstellen von Design- oder Produktmustern, sowie von Produkten oder Vorprodukten aus einer digitalen Zeichnung ohne eigens auf die Teilegeometrie ausgelegte Werkzeuge. Durch 3D-Druck können dabei auch geometrisch hochkomplexe Teile und Strukturen erzeugt werden, die mit bisherigen Fertigungsverfahren nicht zugänglich waren und neue Funktionalitäten ermöglichen.

Es ist bekannt, bei einem Verfahren zum dreidimensionalen Drucken Polymerwerkstoffe in Form von Kunststoffgranulaten oder -filamenten durch Aufschmelzen zu plastifizieren. Das Plastifizieren kann beispielsweise in einem aus dem Spritzgießen bekannten beheizten Plastifizierextruder (Zylinder mit einer Plastifizierschnecke) erfolgen, wodurch eine Polymerwerkstoffschmelze erzeugt wird. Über einen Druckkopf bzw. eine Austragseinheit mit einer Düse kann die Polymerwerkstoffschmelze unter Druck in Faser- oder Tropfenform punkt-, linien- oder schichtweise an vorgesehenen Stellen auf einem dreidimensional computergesteuert verfahrbaren Objektträger ausgetragen werden, wodurch nach einem Aushärten der ausgetragenen Polymerwerkstoffschmelze ein vorgesehener dreidimensionaler Gegenstand entsteht. Ein Beispiel einer für ein derartiges Verfahren geeigneten Vorrichtung ist der kommerzielle 3D-Drucker Typ "Freeformer" der Firma Arburg GmbH & Co KG, der im Jahr 2013 vorgestellt wurde. Ebenso sind Vorrichtungen bekannt, bei denen der Objektträger statisch ist, während der Druckkopf mobil ist, z.B. der kommerzielle 3D-Drucker Typ "Delta Tower" der Delta Tower GmbH.

Führt man z.B. ein 3D-Druckverfahren durch Austragen und/oder durch eine Ablage feiner Tropfen oder Fasern aus, ergeben sich unterschiedliche technische Herausforderungen. Zur Erzeugung definierter, feiner Tropfen sind ein hoher Druck und eine angepasste Verarbeitungstemperatur erforderlich, um die Viskosität des geschmolzenen Polymerwerkstoffes für die Austragseinheit anzupassen. Aus dem Stand der Technik bekannte Vorrichtungen, welche zur Durchführung eines vorstehend beschriebenen Verfahrens zum dreidimensionalen Drucken durch Ausbringung fein dosierter, plastifizierter Schmelze eingerichtet sind, weisen üblicherweise ein gerätespezifisches Temperaturlimit für die Polymerschmelze auf. Dieses Temperaturlimit soll Beschädigungen oder erhöhten Verschleiß von Gerätekomponenten, oder Verfahrensproblemen vorbeugen. Eine besonders temperaturkritische Komponente der Druck-Vorrichtung stellt hierbei der Druckkopf bzw. die Austragseinheit dar, welche in Abhängigkeit der Bauart bei hohen Temperaturen beschädigt werden kann. Ebenso stellen thermischer Verzug (Wärmeausdehnung) von Gerätekomponenten bei hohen Temperaturen sowie - damit einhergehend - ausgeprägte Temperaturgradienten ein Problem dar. Durch unkontrollierte Wärmeausdehnung kann es u.a. zum Verzug, zur Verwindung oder zum Verklemmen von mechanischen Teilen kommen, wodurch das Druckverfahren temporär oder permanent beeinträchtigt wird.

Die Einhaltung eines Temperaturlimits schützt daher insbesondere den Druckkopf bzw. die Austragseinheit der Vorrichtung. Es ist aufgrund der Vielfalt möglicher Bauweisen von 3D-Druckern möglich, dass von Gerät zu Gerät unterschiedliche Temperaturlimits existieren. Ebenso ist es möglich, dass die verschiedenen Gerätekomponenten oder Baugruppen innerhalb eines 3D-Druckers unterschiedliche Temperaturlimits aufweisen.

Bei der Verarbeitung von Hochtemperatur-Kunststoffen, z.B. bestimmten Polyphtalamiden (PPA z.B. PA6T/X), Polyphenylensulfid (PPS) oder Polyaryletherketonen (PAEK) wie Polyetherketon (PEK) oder Polyetheretherketon (PEEK) wird üblicherweise das Temperaturlimit von bekannten Vorrichtungen überschritten, da die Hochtemperatur-Kunststoffe zum Plastifizieren und Austragen typischerweise sogar noch deutlich über ihren bereits hohen Schmelzpunkt erhitzt werden, um eine gewünschte Viskosität der Schmelze zu erreichen und die Schmelze dadurch verarbeitbar zu machen. So liegt zum Beispiel der Schmelzpunkt für PEEK bei 341 °C. Hochtemperatur-Polymerwerkstoffe im vorliegenden Kontext sind Polymere, Polymerblends oder Polymercompounds die aus mindestens einem teilkristallinen Hochtemperatur-Kunststoff bestehen oder mindestens einen teilkristallinen Hochtemperatur-Kunststoff enthalten. Daneben können je nach Anwendungszweck und Einsatzgebiet des Produktes noch Additive, Füllstoffe, Farbstoffe oder Pigmente enthalten sein. Teilkristalline Hochtemperatur-Kunststoffe zeichnen sich hierbei durch einen Schmelzpunkt über 300°C, bevorzugt über 280°C, besonders bevorzugt über 250°C aus.

Es ist naheliegend, dass durch apparative Umbauten des 3D-Druckers, Re-Design von Gerätekomponenten und/oder Verwendung von hochtemperaturbelastbaren Komponenten (vor allem Kabel, Schläuche, Gelenke, Motoren, Schalter, Sensoren, Elektronikteile, Piezo-Elemente etc.) eine konstruktive Lösung des Problems möglich ist. Diese Variante ist aber u.a. aufgrund hoher Kosten nicht bevorzugt. Das Dokument US 2015/0145168 A1 offenbart ein Verfahren zum Drucken eines dreidimensionalen Teils mit einem additiven Fertigungssystem. Das Verfahren umfasst das Schmelzen des Teilmaterials in dem additiven Fertigungssystem, das Ausbilden mindestens eines Teils einer Schicht des dreidimensionalen Teils aus dem geschmolzenen Teilmaterial in einer Fertigungsumgebung und das Halten der Fertigungsumgebung bei einer Aushärtetemperatur, die zwischen einer Glasübergangstemperatur des Teilmaterials und einer Kaltkristallisationstemperatur des Teilmaterials liegt.

## Zusammenfassung der Erfindung

Es ist eine Aufgabe der vorliegenden Erfindung, ein Verfahren und eine Vorrichtung der eingangs genannten Art bereitzustellen, welche ein dreidimensionales Drucken eines Gegenstands aus einem Hochtemperatur-Kunststoff ermöglichen, der zwischenzeitlich in einen plastifizierten Zustand überführt wird, ohne dabei geräte- oder baugruppenspezifische Temperaturlimits des 3D-Druckers zu überschreiten.

Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Gemäß einem ersten Aspekt der Erfindung wird ein Verfahren zum generativen Aufbau eines dreidimensionalen Gegenstands aus einem Hochtemperatur-Polymerwerkstoff bereitgestellt. Das Verfahren beginnt zunächst mit einem Plastifizieren eines Polymerwerkstoffs, sodass eine Schmelze aus dem Hochtemperatur-Polymerwerkstoff entsteht. Das Plastifizieren kann beispielsweise in an sich bekannter Weise mittels eines Plastifizierextruders erfolgen, welcher sich problemlos für höhere Temperaturen, d.h. insbesondere für Temperaturen oberhalb eines Temperaturlimits $T_L$ temperaturkritischer Komponenten, z.B. eines Druckkopfes bzw. einer Austrageinheit, auslegen lässt. Das Plastifizieren erfolgt bei einer Plastifizierungs-Temperatur $T_P$, oberhalb der Schmelz-Temperatur $T_S$ des Hochtemperatur-Polymerwerkstoffs.

Einem Fachmann ist geläufig, dass das Plastifizieren und Fördern einer Kunststoffschmelze nicht ausschließlich mittels eines Plastifizierextruders möglich ist. Ebenso können eine Kontaktheizung (beheizbare Schmelzebehälter, Düsen oder Kanäle), Mikrowellen-, UV- oder Infrarotstrahlung, sowie kohärente Strahlung (Laser) zum Aufschmelzen verwendet werden. Weiter erkennt ein Fachmann, dass die Bereitstellung des/der Polymerwerkstoffe/s nicht auf eine Granulatform limitiert ist. Ebenso sind Lieferformen wie Pulver, Filamente, Folien, Fasern, oder inhomogene Partikel wie Mahlgut geeignet. Die durch das Plastifizieren entstehende Schmelze kann durch Anlegen eines Überdrucks, z.B. eines Schutzgases oder durch mechanische Pumpen wie z.B. Zahnradpumpen, Zylinderspritzen oder Hubkolbenpumpen gefördert werden.

Der plastifizierte Hochtemperatur-Polymerwerkstoff wird auf eine Verarbeitungs-Temperatur $T_V$ abgekühlt, welche oberhalb einer Kristallisations-Temperatur $T_K$ aber unterhalb der Schmelztemperatur $T_S$ des Hochtemperatur-Polymerwerkstoffs liegt. Weiterhin liegt die Verarbeitungs-Temperatur $T_V$ unterhalb eines zulässigen Temperatur-Höchstwerts $T_L$ von wenigstens einer kritischen Gerätekomponente einer Vorrichtung, insbesondere eines 3D-Druckers, zum generativen Aufbau des dreidimensionalen Gegenstands aus dem Hochtemperatur-Polymerwerkstoff, insbesondere unterhalb eines Temperaturlimits $T_L$ eines Druckkopfes bzw. einer Austrageinheit der Vorrichtung.

Anschließend erfolgt ein Fördern der auf Verarbeitungs-Temperatur $T_V$ gekühlten Schmelze des Hochtemperatur-Polymerwerkstoffes in Mittel zum generativen Aufbau des dreidimensionalen Gegenstands aus dem auf die Verarbeitungs-Temperatur $T_V$ abgekühlten plastifizierten Hochtemperatur-Polymerwerkstoff. Die Mittel zum generativen Aufbau des dreidimensionalen Gegenstands können insbesondere eine Austragseinheit, eine Druckdüse oder einen 3D-Druckkopf umfassen. Weiterhin erfolgt ein generatives Aufbauen des dreidimensionalen Gegenstands aus dem auf die Verarbeitungs-Temperatur $T_V$ abgekühlten plastifizierten Hochtemperatur-Polymerwerkstoff unter Nutzung der Mittel zum generativen Aufbau des dreidimensionalen Gegenstands, insbesondere unter Nutzung des 3D-Druckkopfs bzw. unter Nutzung der Austragseinheit.

Mit Verarbeiten bzw. mit generativem Aufbauen des dreidimensionalen Gegenstands ist hierbei insbesondere das Drucken, bzw. das Austragen der Schmelze gemeint. Das selbstständig ablaufende Auskühlen und Auskristallisieren der ausgetragenen bzw. der abgelegten Polymerschmelze auf der finalen Position im Bauteil stellt in diesem Sinne keine Verarbeitung dar.

Mathematisch ausgedrückt stehen die Schmelz-Temperatur $T_S$, die Kristallisations-Temperatur $T_K$, die Verarbeitungs-Temperatur $T_V$, der Temperatur-Höchstwert $T_L$ und die Plastifizierungs-Temperatur $T_P$ in folgender Beziehung zueinander:

$$T_K < T_V < T_L < T_S < T_P.$$

Mit anderen Worten wird die plastifizierte Polymerstoffschmelze auf einen unter der Schmelztemperatur bzw. der Plastifizierungs-Temperatur $T_P$ liegenden Temperaturwert $T_V$ abgekühlt, welcher zwischen der Kristallisations-Temperatur $T_K$ und dem zulässigen Temperatur-Höchstwert $T_L$ der Vorrichtung (Temperaturlimit) liegt, und anschließend auf dem abgekühlten Temperaturwert $T_V$ ausgebracht, um den dreidimensionalen Gegenstand zu formen.

Im Stand der Technik findet man üblicherweise folgendes Szenario:

$$T_K < T_S < T_V \sim T_P < T_L \text{ oder } T_K < T_S < T_V < T_P < T_L.$$

Es wird dabei in der Regel ein einziges Temperaturlimit $T_L$ für das komplette Gerät in Betracht gezogen und dieses Temperaturlimit $T_L$ liegt oberhalb der Verarbeitungstemperatur. Das kann realisiert werden, indem nur niedertemperaturschmelzende Polymerwerkstoffe verwendet werden oder indem man den 3D-Drucker hochtemperaturtauglich auslegt. Die Verarbeitung erfolgt dabei oberhalb der Schmelztemperatur.

Nähert man sich von $T_P$ ausgehend der Verarbeitungs-Temperatur $T_V$ erstarrt die Schmelze noch nicht, denn dies erfolgt erst am Kristallisationspunkt bzw. beim Unterschreiten der Kristallisations-Temperatur $T_K$, welche deutlich unterhalb der Schmelztemperatur und unterhalb des Temperaturlimits $T_L$ der Vorrichtung liegen kann. Die Lage der Kristallisations-Temperatur ist veränderbar, wobei durch Geräte- und Verfahrensparameter (z.B. Schergeschwindigkeit, Orientierung der Polymerketten), Additivierung (z.B. Nukleierung) oder Eingriffe in die Polymerchemie (z.B. Kettenlänge, Verzweigungsgrad, Zusammensetzung) die Kristallisation gezielt angepasst/eingestellt werden kann.

Das Abkühlen der Schmelze kann mittels dazu geeigneter Mittel zum Abkühlen bzw. Temperieren erfolgen und sollte kontrolliert erfolgen. Geeignete Verfahren und zugehörige Mittel, um eine Schmelze gezielt zu kühlen und optional auf einer gekühlten Temperatur zu halten, sind einem Fachmann bekannt. Dies können aktive oder passive Kühlverfahren sein, z.B. mit Medienkühlung (Luft, Flüssigkeit) oder mit elektrischer Kühlung (Peltier etc.). Ebenso ist vorteilhaft vorgesehen den Kühlvorgang aktiv zu steuern und/oder durch Sensorik zu überwachen. Durch die vorstehend beschriebene Abkühlung können insbesondere die temperaturkritischen Komponenten eines 3D-Druckers in Berührung mit einem plastifizierten Polymerwerkstoff kommen, ohne beschädigt zu werden. Das erfindungsgemäße Verfahren ermöglicht somit, dass auch Hochtemperatur-Polymerwerkstoffe in 3D-Druckverfahren zum Einsatz kommen können, ohne die Drucktechnik speziell für hohe Temperaturen ausrüsten zu müssen und ohne ein Temperaturlimit $T_L$ einer dabei verwendeten Vorrichtung zu überschreiten.

Ein geeigneter Temperaturbereich zwischen Kristallisations-Temperatur $T_K$ und Temperaturlimit $T_L$ kann z.B. durch DSC-Messungen grob ermittelt werden. Um Beschädigungen der Vorrichtung besonders sicher vermeiden zu können, kann die Verarbeitungs-Temperatur $T_V$ sehr nahe an der Kristallisations-Temperatur $T_K$ gewählt werden, darf diesen aber nicht unterschreiten. Um in diesem Fall ein vorzeitiges Erstarren der Schmelze zu verhindern, werden bevorzugt mögliche relevante Temperaturschwankungen in den Maschinenbauteilen der Vorrichtung sowie Effekte wie scherinduzierter Kristallisationen ermittelt und die Temperaturführung der Schmelze entsprechend angepasst. Bevorzugt liegt die Verarbeitungs-Temperatur $T_V$ wie vorstehend beschrieben unterhalb der Schmelztemperatur $T_S$ eines Hochtemperatur-Polymerwerkstoffs.

Ein großer Vorteil dieses erfindungsgemäßen Verfahrens ist somit die Möglichkeit, Hochtemperatur-Polymerwerkstoffe zu drucken, wobei man komplett oder teilweise auf teure und komplexe Hochtemperaturmodifikationen der Druckertechnik und Druckermechanik verzichten kann. Dies senkt somit deutlich die Gesamtkosten für derartige Druckverfahren. Weitere signifikante Vorteile ergeben sich aus der geringeren Temperatur der Polymerschmelze: Da durch die gekühlte Schmelze weniger Wärme (thermische Energie) auf das Bauteil übertragen wird, liegt eine geringere Neigung zum Verzug vor, was sich rechnerisch einfach aus der Temperaturdifferenz (z.B. der Differenz der Temperatur der abgelegten Polymerschmelze zur Raumtemperatur oder zur Gebrauchstemperatur des gedruckten Gegenstands) und den thermischen Ausdehnungskoeffizienten bzw. in der Schmelze aus den Volumenausdehnungskoeffizienten der Polymerwerkstoffe ableiten lässt. Ebenso wird das Erstarren der gedruckten Lage beschleunigt und die thermische Werkstoffschädigung wird reduziert. Dies alles trägt dazu bei, die Qualität eines gedruckten Gegenstands zu erhöhen.

Gemäß einer Ausführungsform ist vorteilhaft vorgesehen, dass der Hochtemperatur-Polymerwerkstoff ein Polymer, Polymerblend oder Polymercompound ist, das/der aus mindestens einem teilkristallinen Hochtemperatur-Kunststoff besteht, oder mindestens einen teilkristallinen Hochtemperatur-Kunststoff enthält, wobei der teilkristalline Hochtemperatur-Kunststoff sich durch einen Schmelzpunkt über 260°C auszeichnet. Insbesondere kann der Schmelzpunkt oberhalb von 300°C liegen, bevorzugt oberhalb von 280°C, besonders bevorzugt oberhalb von 250°C. Bevorzugt enthält der Hochtemperatur-Kunststoff weiterhin Additive, Füllstoffe, Farbstoffe oder Pigmente.

Weiterhin ist vorteilhaft vorgesehen, dass der teilkristalline Hochtemperatur-Kunststoff ein Polyaryletherketon (PAEK), ein Polyphtalamid (PPA), ein Polyamid (PA), Polyphenylensulfid (PPS), syndiotaktisches Polystyrol (sPS) oder ein flüssigkristallines Polymer (LCP) ist. Bevorzugt sind weiterhin Polyetherketon (PEK), Polyetheretherketon (PEEK) und teilaromatische Polyamid z.B. PA6T/X.

Gemäß einer weiteren Ausführungsform ist der Hochtemperatur-Polymerwerkstoff ein Polyetheretherketon (PEEK), bevorzugt ein unmodifizierter Polyetheretherketon, oder enthält mindestens ein Polyetheretherketon, wobei eine Schmelztemperatur $T_S$ bei 341°C liegen kann. Der Hochtemperatur-Polymerwerkstoff wird bei einer Temperatur von 345°C bis 400°C, bevorzugt bei 360°C bis 390°C, plastifiziert. Gemäß dieser Ausführungsform wird ferner der plastifizierte Polyetheretherketon direkt nach dem Plastifizieren aber vor dem Weiterfördern in temperaturkritische Gerätebaugruppen auf eine Verarbeitungs-Temperatur $T_V$ zwischen 305°C und 335°C abgekühlt. Anschließend erfolgt das Fördern der auf die Verarbeitungs-Temperatur $T_V$ gekühlten Schmelze des Hochtemperatur-Polymerwerkstoffes insbesondere in eine Austragseinheit oder eine Druckdüse und der dreidimensionale Gegenstand wird aus dem auf die Verarbeitungs-Temperatur $T_V$ abgekühlten Polyetheretherketon-Kunststoff generativ aufgebaut. Die Kristallisationstemperatur des Polyetheretherketon-Kunststoffs liegt dabei laut DSC zwischen 290°C und 300°C.

Weiterhin kann vorteilhaft vorgesehen sein, dass der Hochtemperatur-Polymerwerkstoff in niederviskoser Ausführung vorliegt. Dabei kann diese niedere Viskosität der Schmelze insbesondere über Molmassenverteilung des Polymers/der Polymere, Polymerarchitektur und/oder Additivierung derart eingestellt werden, dass die Austragung des bei Verarbeitungs-Temperatur $T_V$ vorliegenden Hochtemperatur-Polymerwerkstoffes über die Druckdüse oder über die Austragseinheit erfolgen kann. Dadurch kann insbesondere dem Problem entgegengewirkt werden, dass sich aufgrund der Abkühlung die Viskosität innerhalb von Kunststoffen generell erhöht. Als niederviskose Hochtemperatur-Kunststoffe oder Polymerwerkstoffe können dabei insbesondere aus dem Stand der Technik an sich bekannte "Spritzgusstypen" zum Einsatz kommen, die sich gegenüber höher- oder hochviskosen "Extrusions"- bzw. "Compounding-Typen" z.B. durch ein tendenziell geringeres durchschnittlicheres Molekulargewicht auszeichnen und/oder mit ausgesuchten Gleitmitteln bzw. Schmiermitteln additiviert sind.

Gemäß einer weiteren Ausführungsform umfasst das erfindungsgemäße Verfahren weiterhin ein Reinigen der temperaturkritischen Komponenten durch ein Entfernen von auf die Verarbeitungs-Temperatur $T_V$ abgekühltem plastifizierten Hochtemperatur-Polymerwerkstoff. Dies kann planmäßig nach einem Abschluss eines Druckauftrages oder vorzeitig bei planmäßigem oder unplanmäßigem Abbruch eines Druckauftrages erfolgen. Der Reinigungsvorgang erfolgt durch Spülen mit einem neutralen Kunststoff oder einem geeigneten Reinigungsmaterial, dass in Form von Granulaten, Filamenten o.ä. bereitgestellt werden kann und ebenfalls plastifiziert wird. Sollte sich mit anderen Worten noch restliche plastifizierte Schmelze des Hochtemperatur-Polymerwerkstoffs innerhalb einer Vorrichtung zur Durchführung des erfindungsgemäßen Verfahrens finden, nachdem ein Gegenstand wie vorstehend beschrieben aufgebaut worden ist, und sollte sich die Vorrichtung z.B. in einem sogenannten neutralen Modus befinden, in welchem die Vorrichtung pausiert, so kann die abgekühlte restliche Schmelze kontrolliert entfernt werden, bevor Probleme auftreten. Die Reinigung von Gerätekomponenten nach geplantem oder ungeplantem Auskristallisieren oder Erkalten der Polymerschmelze in der Druckvorrichtung kann durch Verwendung geeigneter Lösungsmittel oder durch physikalische bzw. mechanische Verfahren erfolgen. Demontierbare Gerätekomponenten lassen sich z.B. gut durch pyrolytische Verfahren oder in Reinigungsbädern, durch Verwendung von Ultraschall, Bürsten o.ä. reinigen. Die Anwendung von Strahlverfahren z.B. mit Trockeneis, Sand, Metall- oder Keramikpartikeln vor allem Edelstahl und Korund oder Hartschalen ist ebenso möglich.

Gemäß einer weiteren Ausführungsform ist zusätzlich vorgesehen, die Mittel zum Abkühlen des plastifizierten Hochtemperatur-Polymerwerkstoffs auf die Verarbeitungs-Temperatur $T_V$ elektronisch zu regeln, wobei während des Abkühlens, des Förderns und des generativen Aufbauens bevorzugt kontinuierlich die Temperatur des plastifizierten Hochtemperatur-Polymerwerkstoffs überwacht wird und die Mittel zum Abkühlen derart elektronisch geregelt werden, dass der plastifizierte Hochtemperatur-Polymerwerkstoff stets eine Temperatur oberhalb der Kristallisations-Temperatur $T_K$ aufweist. Das Überwachen kann dabei insbesondere ein Messen von Temperaturen des plastifizierten Hochtemperatur-Polymerwerkstoffs mittels eines dafür eingerichteten Sensors, ein Vergleichen mit hinterlegten Temperaturwerten und ein Schlussfolgern aus dem Vergleich umfassen, wobei aus dem Schlussfolgern Maßnahmen dahingehend abgeleitet, eingeleitet und durchgeführt werden können, in welcher Weise die Kühlung fortgesetzt werden soll.

Beispielsweise kann in Abhängigkeit von den empfangenen Temperaturwerten eine Kühlleistung der Mittel zum Abkühlen erhöht werden, die Kühlleistung kann verringert werden oder die Kühlung kann komplett abgestellt werden ("Kühlleistung gleich null"). Weiterhin kann beispielsweise bei einer erkannten, zu schnellen Abkühlung des plastifizierten Hochtemperatur-Polymerwerkstoffs oder bei ermittelten Temperaturen, welche zu nahe an der Kristallisationstemperatur $T_K$ liegen, eine (Wieder-)Erwärmung des Hochtemperatur-Polymerwerkstoffs vorgesehen werden, z.B. mittels dazu eingerichteter zusätzlicher Mittel zum Erwärmen des plastifizierten Hochtemperatur-Polymerwerkstoffs. Ein Steuern des Temperatur-Sensors, das Vergleichen der Temperaturen, das Schlussfolgern sowie das Ableiten, Einleiten und Durchführen (einschließlich Steuern oder Regeln) von Gegenmaßnahmen kann durch eine dazu eingerichtete elektronische Regelungseinheit erfolgen. Diese Ausführungsform leistet einen Beitrag, besonders sicher vermeiden zu können, dass der plastifizierte Hochtemperatur-Polymerwerkstoff im Bereich der Mittel zum Kühlen und/oder im Bereich der Mittel zum generativen Aufbau, insbesondere im Bereich des 3-D-Druckkopfs erstarrt.

Gemäß einem zweiten Aspekt der Erfindung wird eine Vorrichtung nach Anspruch 8 zum generativen Aufbau eines dreidimensionalen Gegenstands aus einem Hochtemperatur-Polymerwerkstoff bereitgestellt. Die Vorrichtung ist dazu eingerichtet, ein Verfahren gemäß dem ersten Aspekt der Erfindung durchzuführen. Dazu umfasst die Vorrichtung Mittel zum Plastifizieren des plastifizierten Hochtemperatur-Polymerwerkstoffs oberhalb der Schmelztemperatur $T_S$ des Hochtemperatur-Polymerwerkstoffs, z.B. einen an sich bekannten Plastifizierextruder, welcher sich problemlos für höhere Temperaturen, insbesondere oberhalb des vorstehend beschriebenen Temperaturlimits $T_L$ auslegen lässt.

Weiterhin umfasst die Vorrichtung Mittel zum Abkühlen des Hochtemperatur-Polymerwerkstoffs auf eine vorstehend beschriebene Verarbeitungs-Temperatur $T_V$, welche oberhalb einer Kristallisations-Temperatur $T_K$ des Hochtemperatur-Polymerwerkstoffs liegt, und welche unterhalb eines Temperatur-Höchstwerts $T_L$ der kritischen Gerätekomponenten innerhalb der Vorrichtung liegt, wobei die Mittel zum Abkühlen vorzugsweise dazu eingerichtet sind, den Hochtemperatur-Polymerwerkstoff auf der Verarbeitungs-Temperatur $T_V$ zu halten und die Verarbeitungs-Temperatur $T_V$ bevorzugt ebenfalls unter der Schmelztemperatur ($T_S$) des Hochtemperatur-Polymerwerkstoffs liegt.

Ferner umfasst die Vorrichtung Mittel zum Fördern der auf die Verarbeitungs-Temperatur $T_V$ gekühlten Schmelze des Hochtemperatur-Polymerwerkstoffes in Mittel zum generativen Aufbau des dreidimensionalen Gegenstands aus dem auf die Verarbeitungs-Temperatur $T_V$ abgekühlten und bevorzugt auf der Verarbeitungs-Temperatur $T_V$ gehaltenen plastifizierten Hochtemperatur-Polymerwerkstoff. Bei den Mitteln zum Fördern kann es sich insbesondere um Überdruck erzeugende Mittel handeln, z.B. unter Verwendung eines Schutzgases, oder um eine mechanische Pumpe, z.B. eine Zahnradpumpe oder eine Hubkolbenpumpe. Bei den Mitteln zum generativen Aufbau kann es sich insbesondere um eine Austragseinheit, eine Druckdüse oder einen 3D-Druckkopf handeln.

Gemäß einer Ausführungsform sind die Mittel zum Plastifizieren dazu eingerichtet, einen Polyetheretherketon-Polymerwerkstoff bzw. einen Polyetheretherketon-Kunststoff bei einer Temperatur von 345°C bis 400°C, bevorzugt bei einer Temperatur zwischen 360°C bis 390°C, zu plastifizieren. Weiterhin sind die Mittel zum Abkühlen dazu eingerichtet, den plastifizierten Polyetheretherketon-Polymerwerkstoff auf eine Verarbeitungs-Temperatur zwischen 305°C und 335° abzukühlen und bevorzugt auch in diesem Temperaturbereich zu halten. Die Kristallisationstemperatur des Polyetheretherketon-Kunststoffs liegt dabei laut DSC zwischen 290°C und 300°C. Ferner sind die Mittel zum schichtweisen Aufbau dazu eingerichtet, den dreidimensionalen Gegenstand aus dem auf die Verarbeitungs-Temperatur abgekühlten und bevorzugt in diesem Temperaturbereich gehaltenen Polyetheretherketon-Polymerwerkstoff generativ aufzubauen.

Gemäß einer weiteren Ausführungsform umfasst die Vorrichtung ferner eine elektronische Regelungseinheit, welche dazu eingerichtet ist, die Mittel zum Abkühlen des plastifizierten Hochtemperatur-Polymerwerkstoffs auf die Verarbeitungs-Temperatur $T_V$ elektronisch zu regeln, wobei während des Abkühlens, des Förderns und des generativen Aufbauens bevorzugt kontinuierlich die Temperatur des plastifizierten Hochtemperatur-Polymerwerkstoffs überwacht wird und die Mittel zum Abkühlen derart elektronisch geregelt werden, dass der plastifizierte Hochtemperatur-Polymerwerkstoff stets eine Temperatur oberhalb der Kristallisations-Temperatur $T_K$ aufweist. Das Überwachen kann dabei insbesondere ein Messen von Temperaturen des plastifizierten Hochtemperatur-Polymerwerkstoffs mittels eines dafür eingerichteten Sensors, ein Vergleichen mit hinterlegten Temperaturwerten und ein Schlussfolgern aus dem Vergleich umfassen, wobei aus dem Schlussfolgern Maßnahmen dahingehend abgeleitet, eingeleitet und durchgeführt werden können, in welcher Weise die Kühlung fortgesetzt werden soll.

Beispielsweise kann in Abhängigkeit von den empfangenen Temperaturwerten eine Kühlleistung der Mittel zum Abkühlen erhöht werden, die Kühlleistung kann verringert werden oder die Kühlung kann komplett abgestellt werden ("Kühlleistung gleich null"). Weiterhin kann beispielsweise bei einer erkannten, zu schnellen Abkühlung des plastifizierten Hochtemperatur-Polymerwerkstoffs oder bei ermittelten Temperaturen, welche zu nahe an der Kristallisationstemperatur $T_K$ liegen, eine (Wieder-)Erwärmung des Hochtemperatur-Polymerwerkstoffs vorgesehen werden, z.B. mittels dazu eingerichteter zusätzlicher Mittel zur Erwärmung des plastifizierten Hochtemperatur-Polymerwerkstoffs.

Die elektronische Regelungseinheit ist dazu eingerichtet, den Temperatursensor für die vorstehend beschriebene Durchführung der Temperaturmessungen zu steuern. Weiterhin ist die elektronische Regelungseinheit dazu eingerichtet, das vorstehend beschriebene Vergleichen, das Schlussfolgern sowie das Ableiten, Einleiten und Durchführen (einschließlich Steuern oder Regeln) von Gegenmaßnahmen zu steuern. Diese Ausführungsform leistet einen Beitrag, besonders sicher vermeiden zu können, dass der plastifizierte Hochtemperatur-Polymerwerkstoff im Bereich der Mittel zum Kühlen und/oder im Bereich der Mittel zum generativen Aufbau, insbesondere im Bereich des 3-D-Druckkopfs erstarrt.

Schmelz- und Kristallisations-Temperaturen lassen sich einfach z.B. durch DSC Messungen (*differential scanning calorimetry*) bestimmen. Gängige Verfahren wie die Bestimmung der Peak-Temperatur oder der Onset-Temperatur finden sich u.a. in Praxis der thermischen Analyse von Kunststoffen; Ehrenstein, G.W.; Riedel, G.; Trawiel, P.; Hanser Verlag 1998; ISBN 3-446-21001-6.

Temperaturlimits von Geräten werden durch Gerätehersteller oder Komponentenhersteller angegeben oder können über Versuche unter Temperaturlast ermittelt werden. Das Temperaturlimit soll dabei eine Grenze angeben, die einen sicheren Betrieb der Druckvorrichtung im Ganzen oder in Teilen (Komponenten) ermöglicht, ohne dass eine nachhaltige Beschädigung oder nachteilige Veränderung der Komponenten eintritt.

Kurze Beschreibung der Figuren

Im Folgenden werden Ausführungsbeispiele der Erfindung anhand der schematischen Zeichnung näher erläutert. Hierbei zeigt:

Fig. 1   eine Seitenansicht eines Ausführungsbeispiels einer erfindungsgemäßen Vorrichtung zum generativen Aufbau eines dreidimensionalen Gegenstands aus einem Hochtemperatur-Polymerwerkstoff,

Fig. 2   ein Flussdiagramm eines Ausführungsbeispiels eines erfindungsgemäßen Verfahrens zum generativen Aufbau eines dreidimensionalen Gegenstands aus einem Hochtemperatur-Polymerwerkstoff.

Detaillierte Beschreibung von Ausführungsbeispielen

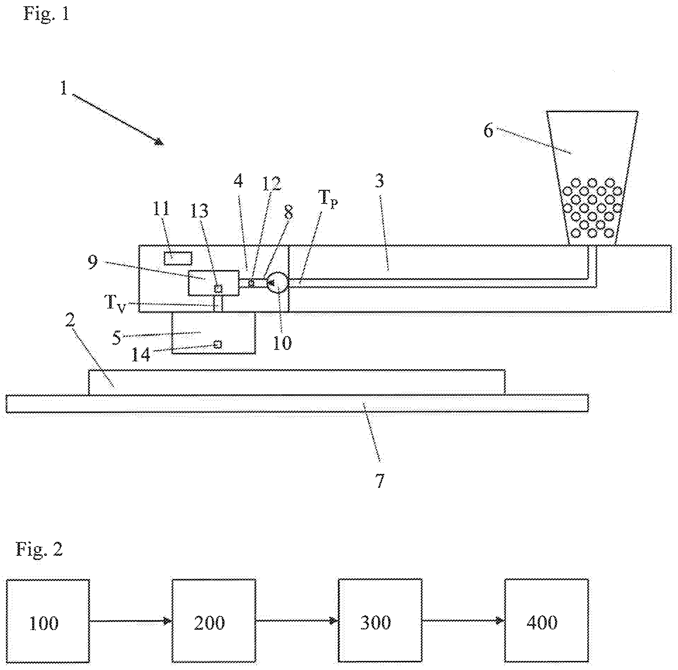

Fig. 1 zeigt eine Vorrichtung 1 zum generativen Aufbau eines dreidimensionalen Gegenstands 2 aus einem Hochtemperatur-Polymerwerkstoff. Bei der Vorrichtung 1 handelt es sich um einen 3-D-Drucker, welcher Mittel 3 zum Plastifizieren des Hochtemperatur-Polymerwerkstoffs, Mittel 4 zum Abkühlen des plastifizierten Hochtemperatur-Polymerwerkstoffs auf eine Verarbeitungs-Temperatur sowie Mittel 5 zum generativen Aufbau des dreidimensionalen Gegenstands 2 aufweist. Ferner umfasst der 3-D-Drucker 1 einen Granulatbehälter 6 und einen Objektträger 7 für den Gegenstand 2.

Bei den Mitteln 3 zum Plastifizieren handelt es sich gemäß dem durch Fig. 1 gezeigten Ausführungsbeispiel um einen Plastifizierextruder. In dem Granulatbehälter 6 befindet sich der Hochtemperatur-Polymerwerkstoff in Granulatform. Der Granulatbehälter 6 ist derart mit dem Plastifizierextruder 3 verbunden, dass Granulat aus dem Granulatbehälter 6 automatisch dem Plastifizierextruder 3 zugeführt werden kann, welcher dazu eingerichtet ist, ihm zugeführtes Granulat auf eine Plastifizierungs-Temperatur $T_P$ oberhalb einer Schmelz-Temperatur $T_S$ des Granulats zu erhöhen und dadurch in eine Polymerwerkstoffschmelze umzuwandeln.

Der Plastifizierextruder 3 kann weiterhin die Polymerwerkstoffschmelze insbesondere unter Druck den Mitteln 4 zum Abkühlen zuführen. Die Mittel 4 zum Abkühlen können beispielsweise einen mittels einer elektronischen Regelungseinheit 11 geregelt kühlbaren Kanal 8 umfassen, durch welchen die Polymerwerkstoffschmelze von dem Plastifizierextruder 3 aus kommend in die Mittel 5 zum schichtweisen Aufbau geleitet wird. Auf ihrem Weg durch den Kanal 8 kann die Polymerwerkstoffschmelze auf eine Verarbeitungs-Temperatur $T_V$ gesenkt werden, welche oberhalb einer Kristallisations-Temperatur $T_K$ des Hochtemperatur-Polymerwerkstoffs und unterhalb der Schmelz-Temperatur $T_S$ des Hochtemperatur-Polymerwerkstoffs liegt.

Die Mittel zum Abkühlen können ferner einen als Reservoir für Polymerwerkstoffschmelze dienenden Hohlraum 9 aufweisen. Der Hohlraum 9 kann wie der Kanal 8 mittels der elektronischen Regelungseinheit 11 geregelt kühlbar sein. Während sich die Polymerwerkstoffschmelze innerhalb des Hohlraums 9 befindet, kann die Polymerwerkstoffschmelze somit auf eine Verarbeitungs-Temperatur $T_V$ gesenkt werden, welche oberhalb einer Kristallisations-Temperatur $T_K$ des Hochtemperatur-Polymerwerkstoffs und unterhalb der Schmelz-Temperatur $T_S$ des Hochtemperatur-Polymerwerkstoffs liegt.

Bei den Mitteln 5 zum generativen Aufbau des dreidimensionalen Gegenstands 2 handelt es sich bei dem durch Fig. 1 gezeigten Ausführungsbeispiel um einen 3-D-Druckkopf, welchem die abgekühlte Polymerwerkstoffschmelze aus den Mitteln 4 zum Abkühlen kommend zugeführt wird. Die Polymerwerkstoffschmelze kann insbesondere durch Fördermittel 10, z.B. in Form einer Zahnradpumpe oder einer Hubkolbenpumpe, durch die Mittel 4 zum Abkühlen in den 3-D-Druckkopf 5 gefördert werden. In dem durch Fig. 1 gezeigten Ausführungsbeispiel befindet sich eine Pumpe 10 im Bereich des Kanals 8 der Mittel 4 zum Abkühlen, z.B. in einem dem Plastifizierextruder 3 zugewandten Eingangsbereich des Kanals 8. Diese Position der Pumpe 10 ist jedoch nicht zwingend. Weiterhin kann die Pumpe bzw. das Fördermittel 10 auch an einer anderen Position angeordnet sein, aus welcher sie eine Förderung der Polymerwerkstoffschmelze durch die Mittel 4 zum Abkühlen in den 3-D-Druckkopf 5 bzw. in die Mittel 5 zum generativen Aufbau des dreidimensionalen Gegenstands 2 ermöglicht, z.B. in einem Bereich zwischen dem Plastifizierextruder 3 und den Mitteln 4 zum Abkühlen, in einem Bereich zwischen den Mitteln 4 zum Abkühlen und dem 3-D-Druckkopf 5 oder in einem Bereich zwischen dem Hohlraum 9 und dem 3-D-Druckkopf 5. Der 3-D-Druckkopf 5 stellt eine temperaturkritische Anlagenkomponente der Vorrichtung 1 dar. Die Polymerwerkstoffschmelze, welche dem 3-D-Druckkopf 5 zugeführt wird, sollte einen festgelegten Temperatur-Höchstwert bzw. ein Temperaturlimit $T_L$ nicht überschreiten, um hitzebedingte Beschädigungen des 3-D-Druckkopfs 5 zu vermeiden. Aus diesem Grund senken die Mittel 4 zum Abkühlen bzw. deren Kanal 8 und/oder deren Hohlraum 9 die Temperatur der Polymerwerkstoffschmelze auf die Verarbeitungs-Temperatur $T_V$ ab, welche oberhalb der Kristallisations-Temperatur $T_K$ des Hochtemperatur-Polymerwerkstoffs und unterhalb des Temperatur-Höchstwerts bzw. Temperaturlimits $T_L$ des 3-D Druckkopfs 5 liegt, wobei die Polymerwerkstoffschmelze in diesem Temperaturbereich gehalten wird.

Innerhalb dieses Temperaturbereichs erstarrt die Polymerwerkstoffschmelze noch nicht, da ein Erstarrungsprozess erst bei Erreichen der Kristallisations-Temperatur $T_K$ einsetzt, welche jedoch überschritten wird. Die Polymerwerkstoffschmelze kann somit über den 3-D-Druckkopf 5 in Tropfenform auf dem Objektträger 7 schichtweise verteilt werden, um auf diese Weise den dreidimensionalen Gegenstand 2 herzustellen bzw. zu generieren. Dazu kann der Objektträger 7 in an sich bekannter Weise in drei zueinander senkrecht stehenden Richtungen relativ zu dem 3D Druckkopf 5 verfahren werden. Ein entsprechendes Verfahren des Objektträgers 7 kann insbesondere computergesteuert sein, wobei zur Steuerung hinterlegte CAD-Daten des herzustellenden dreidimensionalen Gegenstands 2 genutzt werden können.

Um besonders sicher vermeiden zu können, dass die Polymerwerkstoffschmelze im Bereich der Mittel 4 zum Abkühlen und/oder im Bereich des 3-D-Druckkopfs 5 erstarrt, weist der 3-D-Drucker 1 mehrere Temperatur-Sensoren 12 bis 14 auf, welche im Bereich der Mittel 4 zum Abkühlen und im Bereich der Mittel 5 zum schichtweisen Aufbau derart angeordnet sein können, dass die Temperatur der Polymerwerkstoffschmelze gemessen oder ermittelt werden kann. Die Temperatur-Sensoren 12 bis 14 sind kommunikativ mit der Regelungseinheit 11 verbunden. Die Regelungseinheit 11 kann die Temperatur-Sensoren zur Aufnahme von Temperatur-Messwerten anweisen. Alternativ können die Temperatur-Sensoren 12 bis 14 auch dazu eingerichtet sein, die Temperaturmessungen selbstständig durchzuführen. Die Temperaturmessungen erfolgen während des Abkühlens, des Förderns und des generativen Aufbauens bevorzugt kontinuierlich.

Die Temperatur-Sensoren 12 bis 14 übermitteln ermittelte Temperaturwerte an die Regelungseinheit 11. Die Regelungseinheit 11 kann auf Referenztemperaturen und/oder Referenztemperaturverläufe zugreifen, welche es mit den von den Temperatur-Sensoren 12 bis 14 erhaltenen Temperaturwerten vergleicht. Aus dem Vergleich entscheidet die Regelungseinheit 11, in welcher Weise es die Regelung der Kühlung der Mittel 4 zum Abkühlen fortsetzt. Für diese Entscheidung kann die Regelungseinheit 11 beispielsweise auf entsprechende Temperatur-Regelungs-Zuordnungen oder Temperaturverlaufs-Regelungs-Zuordnungen zugreifen. In jedem Fall regelt die Regelungseinheit 11 die Kühlung der Mittel 4 zum Abkühlen derart, dass die Polymerwerkstoffschmelze stets eine Temperatur oberhalb der Kristallisations-Temperatur $T_K$ aufweist. Ebenfalls kann vorgesehen sein, dass die Mittel 4 zum Abkühlen ebenfalls dazu eingerichtet sind, die Polymerwerkstoffschmelze zu erwärmen, falls die Regelungseinheit feststellt, dass sich die Polymerwerkstoffschmelze zu nahe an der Kristallisations-Temperatur $T_K$ befindet oder sich zu rasch abkühlt. Um die vorgenannte Erwärmungsfunktion zu erfüllen, kann der 3-D-Drucker 1 alternativ auch entsprechende Mittel zum Erwärmen aufweisen, welche von der Regelungseinheit 11 auf ähnliche Weise wie die Mittel 4 zum Kühlen geregelt werden können.

Der Plastifizierextruder 3, die Mittel 4 zum Abkühlen, der 3-D-Druckkopf 5, die Fördermittel 10 und der verfahrbare Objektträger 7 können jeweils eine eigene Steuerungseinheit bzw. Regelungseinheit zu ihrer Steuerung bzw. Regelung in dem oben beschriebenen Sinne umfassen. Alternativ kann auch eine zentrale Steuerungseinheit bzw. Regelungseinheit zur Steuerung bzw. Regelung des Plastifizierextruders 3, der Mittel 4 zum Abkühlen, des 3-D-Druckkopfs 5, der Fördermittel 10 und des verfahrbaren Objektträgers 7 in dem oben beschriebenen Sinne vorgesehen sein.

Fig. 2 zeigt, wie ein Ausführungsbeispiel eines Verfahrens gemäß der vorliegenden Erfindung mit der Vorrichtung 1 nach Fig. 1 durchgeführt werden kann. In einem ersten Schritt 100 wird zuvor in dem Granulatbehälter 6 bereitgestelltes PEEK-Granulat, z.B. ein unmodifiziertes TECAPEEK der Fa. Ensinger, mittels des Plastifizierextruders 3 oberhalb der Schmelz-Temperatur $T_S$ des PEEK-Granulats bei einer Plastifizierungs-Temperatur $T_P$ von 360 °C bis 390 °C zu einer PEEK-Kunststoffschmelze plastifiziert (ein Schmelzpunkt von PEEK liegt bei 341 °C).

Anschließend wird die PEEK-Kunststoffschmelze in einem zweiten Schritt 200 auf eine Verarbeitungs-Temperatur $T_V$ zwischen 305 °C und 335 °C abgekühlt, welche oberhalb der Kristallisations-Temperatur $T_K$ von PEEK (für die obengenannte TECAPEEK-Type laut DSC zwischen 290°C und 300°C) und unterhalb des Temperaturlimits $T_L$ des 3-D-Druckkopfs 5 der Vorrichtung 1 liegt. Die Abkühlung wird dadurch erreicht, dass die Kunststoffschmelze durch den gekühlten Kanal 8 und den gekühlten Hohlraum 9 geleitet wird.

Anschließend wird in einem dritten Schritt 300 die Schmelze dem 3-D-Druckkopf 5 zugeführt und der dreidimensionale Gegenstand 2 mittels des 3-D-Druckkopfs 5 schichtweise aufgebaut, wobei der Objektträger 7 entsprechend verfahren wird, und der 3-D Druckkopf 5 tröpfchenweise die abgekühlte Kunststoffschmelze auf dem Objektträger 7 verteilt. Anschließend kann noch in einem optionalen vierten Schritt 400 restliche Kunststoffschmelze, welche sich innerhalb des Plastifizierextruders 3, des Kanals 8, des Hohlraums 9 oder des 3-D Druckkopf 5 befindet, durch Spülen mit einem neutralen Granulat oder mit einem neutralen Kunststoff oder einem geeigneten Reinigungsmaterial (nicht gezeigt) entfernt werden.

**Patentansprüche**

1. Verfahren zum generativen Aufbau eines dreidimensionalen Gegenstands (2) aus einem Hochtemperatur-Polymerwerkstoff, das Verfahren umfassend die Schritte

- Plastifizieren eines Hochtemperatur-Polymerwerkstoffs oberhalb der Schmelz-Temperatur (Ts) des Hochtemperatur-Polymerwerkstoffs, sodass eine Schmelze aus dem Hochtemperatur-Polymerwerkstoff entsteht,

- Abkühlen des plastifizierten Hochtemperatur-Polymerwerkstoffs auf eine Verarbeitungs-Temperatur ($T_V$), welche oberhalb einer Kristallisations-Temperatur ($T_K$) des Hochtemperatur-Polymerwerkstoffs und unterhalb der Schmelztemperatur ($T_S$) des Hochtemperatur-Polymerwerkstoffs liegt, und welche unterhalb eines zulässigen Temperatur-Höchstwerts ($T_L$) von Mitteln (5) zum generativen Aufbau des dreidimensionalen Gegenstands (2) einer Vorrichtung (1) zum generativen Aufbau des dreidimensionalen Gegenstands (2) aus dem Hochtemperatur-Polymerwerkstoff liegt,

- Fördern der auf Verarbeitungs-Temperatur (Tv) gekühlten Schmelze des Hochtemperatur-Polymerwerkstoffes in die Mittel (5) zum generativen Aufbau des dreidimensionalen Gegenstands (2), und

- Generatives Aufbauen des dreidimensionalen Gegenstands (2) aus dem auf die Verarbeitungs-Temperatur abgekühlten plastifizierten Hochtemperatur-Polymerwerkstoff unter Nutzung der Mittel (5) zum generativen Aufbau des dreidimensionalen Gegenstands (2).

2. Verfahren nach Anspruch 1, wobei der Hochtemperatur-Polymerwerkstoff ein Polymer, Polymerblend oder Polymercompound ist, welche jeweils aus mindestens einem teilkristallinen Hochtemperatur-Kunststoff bestehen, oder mindestens einen teilkristallinen Hochtemperatur-Kunststoff enthalten, wobei der teilkristalline Hochtemperatur-Kunststoff einen Schmelzpunkt über 260°C aufweist.

3. Verfahren nach Anspruch 2, wobei der teilkristalline Hochtemperatur-Kunststoff ein Polyaryletherketon (PAEK), ein Polyphtalamid (PPA), ein Polyamid (PA), Polyphenylensulfid (PPS), syndiotaktisches Polystyrol (sPS) oder ein flüssigkristallines Polymer (LCP) ist.

4. Verfahren nach einem der vorstehenden Ansprüche, wobei

- der Hochtemperatur-Polymerwerkstoff ein Polyetheretherketon ist, oder mindestens ein Polyetheretherketon enthält,

- der Hochtemperatur-Polymerwerkstoff bei einer Temperatur von 345°C bis 400°C plastifiziert wird,

- der plastifizierte Hochtemperatur-Polymerwerkstoff auf eine Verarbeitungs-Temperatur ($T_V$) zwischen 305°C und 335° abgekühlt wird,

- das Fördern der auf die Verarbeitungs-Temperatur ($T_V$) gekühlten Schmelze des Hochtemperatur-Polymerwerkstoffes in eine Austragseinheit oder eine Druckdüse erfolgt, und

- der dreidimensionale Gegenstand (2) aus dem auf die Verarbeitungs-Temperatur ($T_V$) abgekühlten Hochtemperatur-Polymerwerkstoff generativ aufgebaut wird.

5. Verfahren nach einem der vorstehenden Ansprüche, wobei der Hochtemperatur-Polymerwerkstoff ein niederviskoser Hochtemperatur-Polymerwerkstoff ist.

6. Verfahren nach einem der einem der vorstehenden Ansprüche, zusätzlich umfassend ein Entfernen von auf die Verarbeitungs-Temperatur (Tv) abgekühltem plastifizierten Hochtemperatur-Polymerwerkstoff nach dem generativen Aufbau des dreidimensionalen Gegenstands (2) durch Spülen mit einem neutralen Kunststoff oder einem geeigneten Reinigungsmaterial.

7. Verfahren nach einem der vorstehenden Ansprüche, zusätzlich umfassend ein elektronisches Regeln von Mitteln (4) zum Abkühlen des plastifizierten Hochtemperatur-Polymerwerkstoffs auf die Verarbeitungs-Temperatur (Tv), wobei während des Abkühlens, des Förderns und des generativen Aufbauens die Temperatur des plastifizierten Hochtemperatur-Polymerwerkstoffs überwacht wird und die Mittel (4) zum Abkühlen derart elektronisch geregelt werden, dass der plastifizierte Hochtemperatur-Polymerwerkstoff stets eine Temperatur oberhalb der Kristallisations-Temperatur ($T_K$) aufweist.

8. Vorrichtung (1) zum generativen Aufbau eines dreidimensionalen Gegenstands (2) aus einem Hochtemperatur-Polymerwerkstoff, die Vorrichtung (1) umfassend:

- Mittel (3) zum Plastifizieren des Hochtemperatur-Polymerwerkstoffs oberhalb der Schmelz-Temperatur ($T_S$) des Hochtemperatur-Polymerwerkstoffs,

- Mittel (4) zum Abkühlen des plastifizierten Hochtemperatur-Polymerwerkstoffs auf eine Verarbeitungs-Temperatur (Tv), welche oberhalb einer Kristallisations-Temperatur ($T_K$) des Hochtemperatur-Polymerwerkstoffs und unterhalb der Schmelztemperatur (Ts) des Hochtemperatur-Polymerwerkstoffs liegt, und welche unterhalb eines Temperatur-Höchstwerts ($T_L$) von Mitteln (5) zum generativen Aufbau des dreidimensionalen Gegenstands (2) der Vorrichtung (1) liegt,
- Mittel (10) zum Fördern der auf die Verarbeitungs-Temperatur (Tv) gekühlten Schmelze des Hochtemperatur-Polymerwerkstoffes in die Mittel (5) zum generativen Aufbau des dreidimensionalen Gegenstands (2) aus dem auf die Verarbeitungs-Temperatur ($T_V$) abgekühlten plastifizierten Hochtemperatur-Polymerwerkstoff, wobei der Hochtemperatur-Polymerwerkstoff ein Polyetheretherketon-Polymerwerkstoff ist, und wobei
- die Mittel (3) zum Plastifizieren dazu eingerichtet sind, den Polyetheretherketon-Polymerwerkstoff bei einer Temperatur von 345°C bis 400°C zu plastifizieren,
- die Mittel (4) zum Abkühlen dazu eingerichtet sind, den plastifizierten Polyetheretherketon-Polymerwerkstoff auf eine Verarbeitungs-Temperatur ($T_V$) zwischen 305°C und 335° abzukühlen, und
- die Mittel (5) zum generativen, insbesondere schichtweisen, Aufbau dazu eingerichtet sind, den dreidimensionalen Gegenstand (2) aus dem auf die Verarbeitungs-Temperatur ($T_V$) abgekühlten Polyetheretherketon-Polymerwerkstoff generativ aufzubauen.

9. Vorrichtung nach Anspruch 8, zusätzlich umfassend eine elektronische Regelungseinheit (11), welche dazu eingerichtet ist, die Mittel (4) zum Abkühlen des plastifizierten Hochtemperatur-Polymerwerkstoffs auf die Verarbeitungs-Temperatur ($T_V$) elektronisch zu regeln, wobei während des Abkühlens, des Förderns und des generativen Aufbauens die Temperatur des plastifizierten Hochtemperatur-Polymerwerkstoffs überwacht wird und die Mittel (4) zum Abkühlen derart elektronisch geregelt werden, dass der plastifizierte Hochtemperatur-Polymerwerkstoff stets eine Temperatur oberhalb der Kristallisations-Temperatur ($T_K$) aufweist.

**Claims**

1. A method for the additive manufacturing of a three-dimensional object (2) out of a high-temperature polymer material, the method comprising the steps of

- plasticizing a high-temperature polymer material above the melting temperature ($T_S$) of the high-temperature polymer material, such that a melt of the high-temperature polymer material is generated,
- cooling the plasticized high-temperature polymer material to a processing temperature (Tv), which is above a crystallization temperature ($T_K$) of the high-temperature polymer material and below the melting temperature (Ts) of the high-temperature polymer material, and which is below a permissible maximum temperature value ($T_L$) of means (5) for additively manufacturing the three-dimensional object (2) of a device (1) for additively manufacturing the three-dimensional object (2) out of the high-temperature polymer material,
- conveying the melt of the high-temperature polymer material cooled to the processing temperature ($T_V$) into the means (5) for additively manufacturing the three-dimensional object (2), and
- additively manufacturing the three-dimensional object (2) out of the plasticized high-temperature polymer material cooled to the processing temperature using the means (5) for additively manufacturing the three-dimensional object (2).

2. The method according to claim 1, wherein the high-temperature polymer material is a polymer, a polymer blend or a polymer compound, each of which consists of at least one partially crystalline high-temperature plastic, or comprises at least one partially crystalline high-temperature plastic, wherein the partially crystalline high-temperature plastic has a melting point above 260°C.

3. The method according to claim 2, wherein the partially crystalline high-temperature plastic is a polyaryletherketone (PAEK), a polyphtalamide (PPA), a polyamide (PA), polyphenylene sulfide (PPS), syndiotactic polystyrene (sPS), or a liquid crystalline polymer (LCP).

4. The method according to any one of the preceding claims, wherein

- the high-temperature polymer material is a polyetheretherketone, or comprises at least one polyetheretherketone,
- the high-temperature polymer material is plasticized at a temperature of 345°C to 400°C,
- the plasticized high-temperature polymer material is cooled to a processing temperature (Tv) between 305°C and 335°,
- the conveying of the melt of the high-temperature polymer material cooled to the processing temperature (Tv) takes place into a discharge unit or a print nozzle, and
- the three-dimensional object (2) is additively manufactured out of the high-temperature polymer material cooled to the processing temperature (Tv).

5. The method according to any one of the preceding claims, wherein the high-temperature polymer material is a low-viscosity high temperature polymer material.

6. The method according to any one of the preceding claims, further comprising removing plasticized high-temperature polymer material cooled to the processing temperature (Tv) after additively manufacturing the three-dimensional object (2) by rinsing with a neutral plastic or a suitable cleaning material.

7. The method according to any one of the preceding claims, further comprising electronically controlling of means (4) for cooling the plasticized high-temperature polymer material to the processing temperature (Tv), wherein, during cooling, conveying and additively manufacturing, the temperature of the plasticized high-temperature polymer material is monitored and the means (4) for cooling are electronically controlled such that the plasticized high-temperature polymer material always has a temperature above the crystallization temperature ($T_K$).

8. A device (1) for the additive manufacturing of a three-dimensional object (2) out of a high-temperature polymer material, the device (1) comprising:

- means (3) for plasticizing the high-temperature polymer material above the melting temperature ($T_S$) of the high-temperature polymer material,
- means (4) for cooling the plasticized high-temperature polymer material to a processing temperature (Tv), which is above a crystallization temperature ($T_K$) of the high-temperature polymer material and below the melting temperature (Ts) of the high-temperature polymer material, and which is below a maximum temperature value ($T_L$) of means (5) for additively manufacturing the three-dimensional object (2) of the device (1),
- means (10) for conveying the melt of the high-temperature polymer material cooled to the processing temperature (Tv) into the means (5) for additively manufacturing the three-dimensional object (2) out of the plasticized high-temperature polymer material cooled to the processing temperature (Tv),
wherein the high-temperature polymer material is a polyetheretherketone polymer material, and wherein
- the means (3) for plasticizing are configured for plasticizing the polyetheretherketone polymer material at a temperature of 345°C to 400°C,
- the means (4) for cooling are configured for cooling the plasticized polyetheretherketone polymer material to a processing temperature (Tv) between 305°C and 335°, and
- the means (5) for additively, in particular layer-by-layer, manufacturing are configured for additively manufacturing the three-dimensional object (2) out of the polyetheretherketone polymer material cooled to the processing temperature (Tv).

9. The device according to claim 8, further comprising an electronic control unit (11) configured for electronically controlling the means (4) for cooling the plasticized high-temperature polymer material to the processing temperature (Tv), wherein, during cooling, conveying and additively manufacturing, the temperature of the plasticized high-temperature polymer material is monitored and the means (4) for cooling are electronically controlled such that the plasticized high-temperature polymer material always has a temperature above the crystallization temperature ($T_K$).

**Revendications**

1. Procédé de fabrication additive d'un objet tridimensionnel (2) à partir d'une matière polymère à haute température, le procédé comprenant les étapes consistant à :

- plastifier une matière polymère à haute température au-dessus de la température de fusion ($T_s$) de la matière polymère à haute température, de telle sorte qu'un bain se forme à partir de la matière polymère à haute température,
- refroidir la matière polymère à haute température plastifié jusqu'à une température de transformation ($T_V$) qui est supérieure à une température de cristallisation ($T_k$) de la matière polymère à haute température et inférieure à la température de fusion ($T_S$) de la matière polymère à haute température, et qui est inférieure à une valeur de température maximale admissible ($T_L$) de moyens (5) pour la fabrication additive de l'objet tridimensionnel

EP 3 529 046 B1

(2) d'un dispositif (1) pour la fabrication additive de l'objet tridimensionnel (2) à partir de la matière polymère à haute température,
- transférer le bain de la matière polymère à haute température refroidi jusqu'à la température de transformation ($T_V$), dans les moyens (5) de fabrication additive de l'objet tridimensionnel (2), et
- réaliser l'objet tridimensionnel (2) par fabrication additive à partir de la matière polymère à haute température plastifié, refroidi jusqu'à la température de transformation, en utilisant les moyens (5) de fabrication additive de l'objet tridimensionnel (2).

2. Procédé selon la revendication 1, dans lequel la matière polymère à haute température est un polymère, un mélange de polymères ou une composition polymère qui est respectivement constitué d'au moins une matière plastique à haute température partiellement cristalline, ou qui contient au moins une matière plastique à haute température partiellement cristalline, dans lequel la matière plastique à haute température partiellement cristalline a un point de fusion supérieur à 260 °C.

3. Procédé selon la revendication 2, dans lequel la matière plastique à haute température partiellement cristalline est une polyaryléthercétone (PAEK), un polyphtalamide (PPA), un polyamide (PA), un poly(phénylènesulfure) (PPS), un polystyrol syndiotactique (sPS) ou un polymère cristallin liquide (LCP).

4. Procédé selon l'une des revendications précédentes, dans lequel :

- la matière polymère à haute température est une polyétheréthercétone ou contient au moins une polyétheréthercétone,
- la matière polymère à haute température est plastifiée à une température de 345 °C à 400 °C,
- la matière polymère à haute température plastifiée est refroidie jusqu'à une température de transformation ($T_V$) comprise entre 305 °C et 335 °C,
- le transfert du bain de la matière polymère à haute température refroidi jusqu'à la température de transformation ($T_V$) s'effectue dans une unité d'évacuation ou une buse d'impression, et
- l'objet tridimensionnel (2) est réalisé par fabrication additive à partir de la matière polymère à haute température refroidie jusqu'à la température de transformation ($T_V$).

5. Procédé selon l'une des revendications précédentes, dans lequel la matière polymère à haute température est une matière polymère à haute température à faible viscosité.

6. Procédé selon l'une des revendications précédentes, comprenant en outre un retrait de la matière polymère à haute température plastifiée, refroidie jusqu'à la température de transformation ($T_V$), après la fabrication additive de l'objet tridimensionnel (2), par rinçage avec une matière plastique neutre ou une matière de nettoyage adaptée.

7. Procédé selon l'une des revendications précédentes, comprenant en outre une régulation électronique de moyens (4) pour refroidir la matière polymère à haute température plastifiée jusqu'à la température de transformation ($T_V$), dans lequel pendant refroidissement, le transfert et la fabrication additive, la température de la matière polymère à haute température plastifiée est surveillée et les moyens (4) de refroidissement sont régulés électroniquement de telle sorte que la matière polymère à haute température plastifiée a toujours une température supérieure à la température de cristallisation ($T_k$).

8. Dispositif (1) pour la fabrication additive d'un objet tridimensionnel (2) à partir d'une matière polymère à haute température, le dispositif (1) comprenant :

- des moyens (3) pour plastifier la matière polymère à haute température au-dessus de la température de fusion ($T_S$) de la matière polymère à haute température,
- des moyens (4) pour refroidir la matière polymère à haute température plastifiée jusqu'à une température de transformation ($T_V$) qui est supérieure à une température de cristallisation ($T_k$) de la matière polymère à haute température et inférieure à la température de fusion ($T_S$) de la matière polymère à haute température, et qui est inférieure à une valeur de température maximale ($T_L$) des moyens (5) pour la fabrication additive de l'objet tridimensionnel (2) du dispositif (1),
- des moyens (10) pour transférer le bain de la matière polymère à haute température, refroidi jusqu'à la température de transformation ($T_V$), dans les moyens (5) de fabrication additive de l'objet tridimensionnel (2) à partir de la matière polymère à haute température plastifiée, refroidie jusqu'à la température de transformation ($T_V$),

dans lequel la matière polymère à haute température est une matière polymère de polyétheréthercétone, et dans lequel

- les moyens (3) de plastification sont configurés pour plastifier la matière polymère de polyétheréthercétone à une température de 345 °C à 400 °C,
- les moyens (4) de refroidissement sont configurés pour refroidir la matière polymère de polyétheréthercétone plastifiée jusqu'à une température de transformation ($T_V$) comprise entre 305 °C et 335 °C, et
- les moyens (5) de fabrication additive, en particulier de fabrication additive par couches, sont configurés pour réaliser l'objet tridimensionnel (2) par fabrication additive à partir de la matière polymère de polyétheréthercétone refroidie jusqu'à la température de transformation ($T_v$).

9. Dispositif selon la revendication 8, comprenant en outre une unité de régulation électronique (11) qui est configurée pour réguler électroniquement les moyens (4) de refroidissement de la matière polymère à haute température plastifiée jusqu'à la température de traitement ($T_V$), dans lequel pendant le refroidissement, le transfert et la fabrication additive, la température du matériau polymère à haute température plastifié est surveillée et les moyens (4) de refroidissement sont régulés électroniquement de telle sorte que le matériau polymère à haute température plastifié a constamment une température supérieure à la température de cristallisation ($T_k$).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150145168 A1

**In der Beschreibung aufgeführte Nicht-Patentliteratur**

- **EHRENSTEIN, G.W. ; RIEDEL, G. ; TRAWIEL, P.** Praxis der thermischen Analyse von Kunststoffen. Hanser Verlag, 1998